# EUROPEAN PATENT SPECIFICATION

(11) **EP 1 744 495 B1**
(45) Date of publication and mention of the grant of the patent: **19.03.2008**
(21) Application number: 05015418.6
(22) Date of filing: 15.07.2005
(51) Int. Cl.: H04L 12/56

(54) **Round trip time estimation**
Umlaufzeitabschätzung
Estimation du temps de parcours aller-retour

(43) Date of publication of application: 17.01.2007
(73) Proprietor: Microsoft Corporation, Redmond WA 98052 (US)
(72) Inventor: Key, Peter, c/o Microsoft Research Ltd., Cambridge CB3 0FB (GB); Massoulie, Laurent, c/o Microsoft Research Ltd., Cambridge CB3 0FB (GB); Gunawardena, Dinan Srilal, c/o Microsoft Res. Ltd., Cambridge CB3 0FB (GB); Black, Richard John, c/o Microsoft Research Ltd., Cambridge CB3 0FB (GB); O'Shea, Gregory F. G., c/o Microsoft Res. Ltd., Cambridge CD3 0FB (GB)
(74) Representative: Free, Rachel Alder

(56) References cited:
- US-A- 5 812 528
- US-B1- 6 882 622

## Description

### TECHNICAL FIELD

This description relates generally to communications networks and more specifically to estimating round trip time.

### CROSS-REFERENCE TO RELATED APPLICATION

This application is related to European Patent Application entitled "Control of Background Transfers" filed on July 15, 2005, also in the name of Microsoft Corporation, and which is incorporated herein by reference.

### BACKGROUND

In the field of computer networking it is often useful to know how long a signal takes to travel from its source to its destination and back again. This is known as the Round Trip Time, or RTT. Typically the originator of a message estimates RTT for purposes such as timeout and retransmission, in order that lost or corrupt transmissions may be retried, by comparing the time at which a specific transmission was made against the time at which some form of acknowledgement for successful receipt of the transmission is received from the counterparty. Such techniques are widely deployed, for example in the IETF Transmission Control Protocol (TCP). For example, TCP provides a timestamp option which allows a sender to place a timestamp value in every segment. The receiver reflects this value in acnowledgement messages allowing the sender to calculate a RTT for each received acknowledgement message (ACK). TCP is a connection-oriented, reliable-delivery byte stream transport layer communication protocol, currently documented in IETF request for comments (RFC) 793.

US Patent Application published as US 2005/0071451 A1 describes a background transport service in which a receiver node infers the available network capacity between itself and a sender node over a control interval. Based on the inferred available network capacity, the receiver node adjusts its receive window size accordingly in order to conservatively optimize the bandwidth used by a background transfer without degrading performance of other foreground transfers on the network.

### SUMMARY

Known methods for estimating RTT are generally unsuitable for use by a simplex receiver. The term "simplex receiver" is used here to refer to a receiver or destination node which will not be sending data back to an associated transmitter or source node. The method can also be used for estimating RTT by a non-simplex receiver. Known methods typically involve sending specific data transmissions and this is not possible from a simplex receiver. This problem is addressed by making use of flow control mechanisms in communications protocols. By using the flow control mechanisms we have been able to enable a simplex receiver to estimate RTT without the need to send specific data transmissions from the simplex receiver. Advantageously this can be achieved for a simplex receiver provided as a software application provided on a processor such as a personal computer using a conventional operating system. No modification to the communications protocol itself is essential. The methods are also suitable for enabling a non-simplex (an active) receiver to estimate RTT and the invention is intended to encompass this situation in some embodiments.

According to a first aspect of the present invention there is provided a method of enabling a receiver to estimate a round trip time between itself and a transmitter in a communications network, said round trip time being a time taken for travel from one of the receiver and transmitter to the other and back again using a communications protocol that comprises a flow control mechanism, said method comprising the steps of:
- using said flow control mechanism to interrupt transmission of data from the transmitter to the receiver;
- using said flow control mechanism to resume transmission of data from the transmitter to the receiver; and
- estimating said round trip time on the basis of information about time associated with data arriving from the transmitter at the receiver following said resumption.
   Preferably the method further comprises classifying data arriving from the transmitter at the receiver as to whether it causally followed the transmitter becoming aware of the resumption; and ignoring the time associated with data which was not causally sent.
Preferably the method comprises classifying zero window probe packets as non-causal data.
Preferably said classification comprises comparing the amount of data received at the receiver following resumption with the expected transfer size of the communications protocol.

According to another aspect of the present invention there is provided a receiver arranged to estimate a round trip time between itself and a transmitter in a communications network, said round trip time being a time taken for travel from one of the receiver and transmitter to the other and back again using a communications protocol that comprises a flow control mechanism, said receiver comprising:
- a processor arranged to use flow control mechanism to interrupt transmission of data from the transmitter to the receiver;
- said processor also being arranged to use flow control mechanism to resume transmission of data from the transmitter to the receiver; and
- an estimator arranged to estimate said round trip time on the basis of information about time associated with the arrival of data following said resumption.
   Preferably the receiver is configured with a small number of buffers such that those buffers become full more rapidly and more regularly.
Preferably partially emptying the buffers comprises reading an amount of data sufficient to trigger the communications protocol to rapidly resume normal operation. For example, the communications protocol is the IETF, TCP and the amount of data sufficient to trigger the communications protocol is a multiple of the maximum segment size of the TCP.
Preferably the step of obtaining a time associated with data arriving from the transmitter to the receiver following resumption further comprises detecting an increase in the amount of data in the buffers. For example this comprises noting the time at which the communications protocol recalculates available buffer space.

According to another aspect of the present invention there is provided a computer program stored on a computer readable medium and arranged to control a receiver in order to estimate a round trip time between itself and a transmitter in a communications network, said round trip time being a time taken for travel from one of the receiver and transmitter to the other and back again using a communications protocol that comprises a flow control mechanism, said computer program being arranged to control the receiver such that it:
- uses said flow control mechanism to interrupt transmission of data from the transmitter to the receiver;
- uses said flow control mechanism to resume transmission of data from the transmitter to the receiver; and
- estimates said round trip time on the basis of information about time associated with the arrival of data following said resumption.
   Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a high level schematic diagram of a receiver in a communications network;
FIG. 2 is a flow diagram of a method carried out by the receiver of FIG. 1 to estimate round trip time;
FIG. 3 is a flow diagram of the method of FIG. 2 in more detail;
FIG. 4 is a flow diagram of a method of using a receiver to estimate round trip time in the case that the communications protocol being used is TCP.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

### examples.

The present invention recognizes that whilst many methods exist for estimating round trip time these are all typically arranged for use by a transmitter or source. By estimating RTT that source or transmitter is then able to deal with timeout and retransmission and other similar situations. However, the destination or receiver has not previously been considered as needing to estimate RTT itself in the case that it is a simplex receiver. As mentioned above, the term "simplex receiver" is used here to refer to a receiver or destination node which will not be sending data back to an associated transmitter or source node. Because the receiver is simplex it will not be making retransmissions and so typically it does not need to estimate RTT in order to decide whether retransmission is required for example. Thus known methods for estimating RTT are generally unsuitable for use by a simplex receiver. Similarly the methods that involve sending a particular data packet are not appropriate for use by a simplex receiver.

The present invention addresses this problem by making use of flow control mechanisms in communications protocols. The term "flow control mechanism" is used here to refer to communications protocol methods which have the purpose of preventing a receiver from being overrun with data when an associated transmitter is able to send data faster, or in greater quantity, than the receiver can consume them. By using the flow control mechanisms we have been able to enable a simplex receiver to estimate RTT without the need to send specific data transmissions from the simplex receiver.

A summary of the flow control mechanism of TCP is now given for ease of reference although full details of this flow control mechanism are known to the skilled person in the art and are available in the IETF RFC mentioned above.

As mentioned above TCP is a connection-oriented protocol; that is two nodes in a communications network must establish a TCP connection with one another before they can exchange data using TCP. Each end of a TCP connection has a finite amount of buffer space. A receiving TCP only allows the other end to send as much data as the receiver has buffers for. This prevent a fast host from overflowing the buffers on a slow host. TCP's flow control is provided by each end advertising a window size. This is the number of bytes, starting with the one specified by the acknowledgement number field, that the receiver is willing to accept. A sliding window method is used to enable the flow control mechanism. In high level terms, this window can be thought of as closing when data is sent. The window is considered to open when the receiving process reads acknowledged data, freeing up space in its TCP receive buffer. This allows more data to be sent. The window can also be considered to shrink. When the window shrinks to become a zero window then the sender is prevented from transmitting any data. In that case, the buffers at the receiver are full; the receiver advertises a zero window and the sender stops transmitting more data. If the receiver later empties its buffers (at least partially) a window update (which is a type of ACK message) is sent advertising that the receiver can now receive a specified number of bytes. This window update message need not acknowledge any new data, it just opens the window.

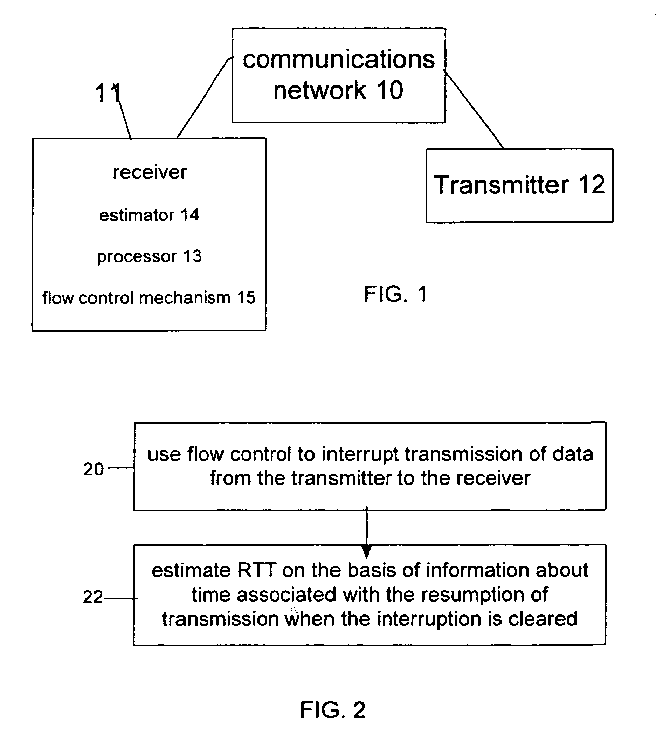

FIG. 1 is a high level schematic diagram of a receiver 11 (which may be active or simplex) in a communications network 10. For reasons of clarity the receiver 11 is now referred to as simplex although it could also be active. The communications network 10 may be any suitable network such as the internet, a local area network, wide area network, intranet or other network. A transmitter 12 is also shown connected to the network and in the examples discussed here it is assumed that a communications session can be established between the simplex receiver 11 and the transmitter 12 using a communications protocol that comprises a flow control mechanism. For example, this communications protocol can be TCP or Stream Control Transmission Control Protocol (SCTP, RFC296) or any other suitable connection-oriented communications protocol that has a flow control mechanism.
The simplex receiver is any suitable network node which is capable of receiving data from the transmitter 12 using the communications protocol. In one embodiment it is provided by a software application on a personal computer, that computer being controlled by a conventional operating system which comprises one or more drivers for driving a communications protocol receive stack. This is referred to herein as a "user-mode" implementation. It is also possible to arrange the simplex receiver such that it is integral with the communications protocol driver. This is referred to herein as a "kernel-level" implementation.
The simplex receiver comprises a processor 13 which is arranged to use a communications protocol flow control mechanism 15 to interrupt transmission of data from the transmitter to the receiver. In the user-mode implementation this is achieved by using an interface between the operating system and the drivers for the communications protocol stack. In the kernel level implementation this is achieved by providing a new module in the drivers for the communications protocol stack.
The simplex receiver also comprises an estimator 14 arranged to estimate the round trip time on the basis of information about time associated with the resumption of transmission. This estimator 14 can be integral with the processor 13 or not as required.
Particular problems are involved for both the user-level and kernel-level implementations. In the case of the user-level implementation the present invention overcomes limitations in conventional existing interfaces to the communications protocol drivers. It also requires no special support from, or modifications to, the communications protocol itself.
FIG. 2 is a high level flow diagram of a method of enabling the simplex receiver of FIG. 1 to estimate round trip time. The simplex receiver is arranged to use the communications protocol flow control mechanism to interrupt transmission of data from the transmitter 12 to the receiver 11 (see step 20 of FIG. 2). It then estimates round trip time on the basis of information about time associated with the resumption of transmission when the interruption is cleared (see box 22 of FIG. 2).

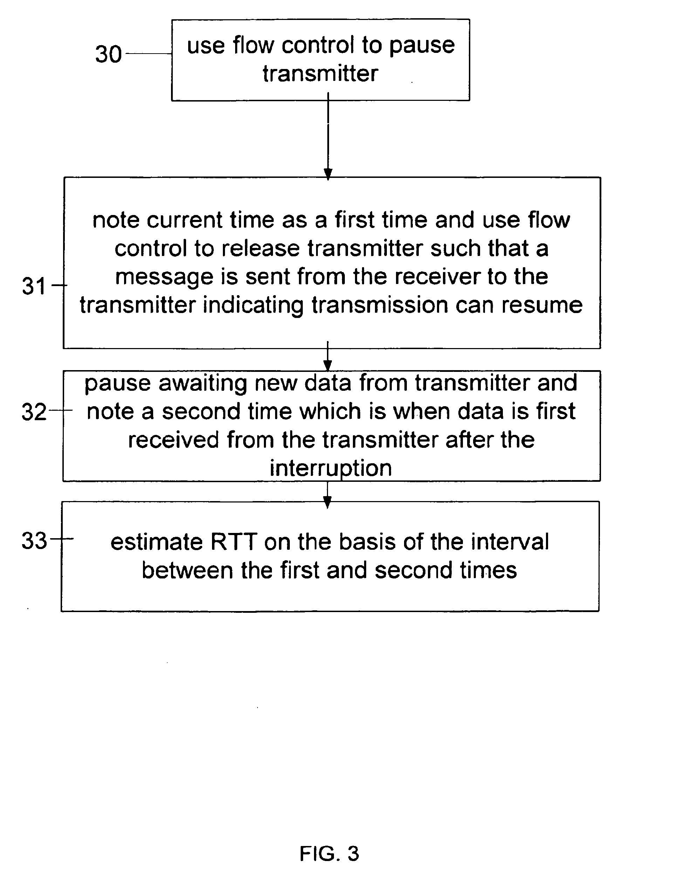

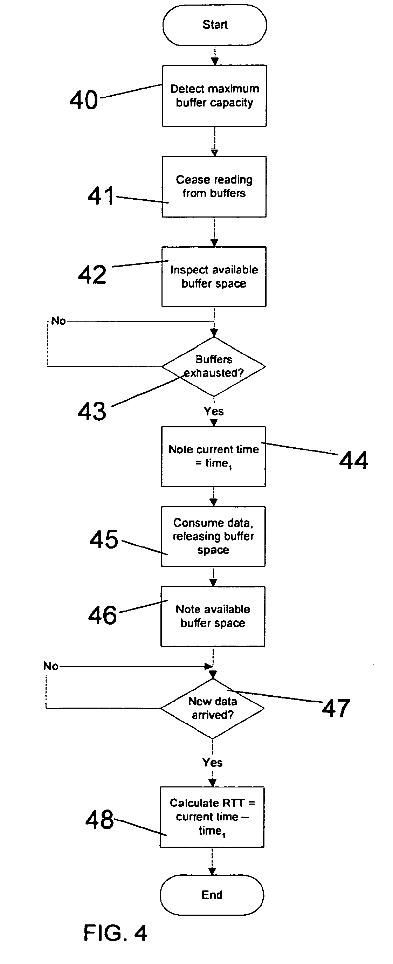

FIG. 3 shows the method of FIG. 2 in more detail. The simplex receiver uses the communications protocol flow control mechanism to pause the transmitter 12 (see box 30 of FIG. 3). The simplex receiver 11 uses its processor 13 to release the transmitter 12 by means of the communications protocol flow control mechanism 15. Immediately before doing this the simplex receiver 11 notes the current time as a first time (see box 31 of FIG. 3). As part of this process a message is sent from the simplex receiver 11 to the transmitter 12 indicating that transmission can resume (see box 32 of FIG. 3). The simplex receiver 11 now pauses awaiting new data from the transmitter 12. It notes a second time which is when data is first received from the transmitter 12 after the interruption in transmission (see box 33 of FIG. 3). The estimator 14 at the simplex receiver 11 then estimates the round trip time on the basis of the interval between the first and second times (see box 34 of FIG. 4). This effectively provides an estimate of round trip time because the time interval comprises the time taken for the message of step 32 to be sent from the receiver to the transmitter plus the time taken for a data packet to be sent from the transmitter to the receiver.

FIG. 4 is a flow diagram of a user-level method of enabling the simplex receiver 11 to estimate round trip time in the case that the communications protocol is TCP. A receiving application at the simplex receiver 11 (that is, software implementing the simplex receiver as mentioned above) detects, or optionally dictates, the amount of data that may be buffered locally. For example this is achieved by means of the standard IETF getsockopt (setsockopt) sockets API function, or equivalent (see box 40 of Figure 4). The TCP flow control mechanism

on the receiver also notifies the TCP flow control mechanism at the transmitter of the available buffer size in the form of a "Receive Window" size encoded in its acknowledgements of successful data receipt sent to the transmitter as known in TCP. It is not essential for the receiving application to detect or dictate the amount of data that may be buffered locally because the TCP flow control mechanism is able to detect this and advertise a receive window size as known in the art. However, the step 40 of using the receiving application to detect or dictate the amount of data buffered locally is used in some embodiments to reduce the amount of data that may be buffered locally.

The receiving application next (see box 41 of FIG. 4) ceases to read data from its local buffers. Data continue to arrive from the transmitter, causing the available buffer space to deplete. The receiving application monitors the available capacity of the buffers, for example by using either or both of the standard IETF recv(MSG_PEEK) or Windows WSAloctl() API functions, until all available buffer space has been consumed (see boxes 42 and 43 of FIG. 4). At this point the receiving application may reasonably assume that the transmitting TCP module is aware that no further buffer space is available at the receiver and therefore that transmission has ceased pending the availability of buffer space at the receiver. Because this is a user-level implementation the receiving application monitors the available buffer capacity as described above, ignoring zero size window probes. The simplex receiver now reads from the buffered data with the intent of releasing buffer space and causing the receiver's TCP module to send prompt indication to the sender's TCP module that transmissions may recommence (see box 45 of FIG. 4). Immediately before doing so the simplex receiver takes note of the current time (first time) as illustrated in box 44 of FIG. 4. In practice it is important for the receiving application to read enough buffered data to cause a rapid reaction from both the receiving and sending TCP modules (typically in the order of one or two multiples of the Maximum Segment Size (MSS) parameter

negotiated between the two TCP modules as known in the art). Once enough space has been created in the receive buffer a window update message is sent from the simplex receiver to the transmitter. This indicates to the transmitter that it is able to transmit a specified amount of data to the receiver.

For simplicity, but without loss of generality, we will assume that the receiving application reads all available data from the local buffers, in which case the buffers are now empty and the receiving application may suspend its own execution pending the availability of new data in the local buffers;

The simplex receiver 11 awakes when new data has arrived from the transmitter in the receiver's buffers (see box 47 of FIG. 4), at which point it immediately calculates a sample of the RTT as the current time (also referred to herein as second time) less the first time (see box 48 of FIG. 4).

FIG. 4 also shows a step 46 in which the simplex receiver notes the available buffer space. This is optional and is carried out after the receive buffer is at least partially emptied such that transmission can recommence. This optional step assists the simplex receiver in distinguishing new data packets from the transmitter from one-byte probe packets. We ignore zero window probes because these would corrupt the RTT estimate.

In practice there is often some delay encountered at various points in the above procedure, for example in the scheduling and transmission of flow control messages or in the scheduling and notification of requests to an operating system. Such delays are typical of general purpose operating systems and the networking software they contain. These delays can disturb the RTT sample obtained. We therefore obtain a plurality of RTT samples by simply repeating the methods described above. We then use any suitable smoothing or filtering techniques on the RTT samples.

As an example of a smoothing technique the receiver may simply compute an average of RTT estimates according to some weighting parameter chosen to
provide an acceptable balance between robustness to variance in RTT samples and any requirements for rapid detection of changing RTT on the underlying network.
As an example of a filtering technique the receiver may maintain an estimate of the minimum acceptable RTT that is used to filter outlying RTT samples. The minimum RTT estimate itself is continually updated by RTT samples that fall within an acceptable range defined by the minimum RTT itself and a control parameter. The control parameter may be adjusted to obtain the desired balance between stability in the face of variable RTT samples and responsiveness to changes in the underlying behavior of the network.
Further details with respect to a particular user-level implementation using TCP are now given.
A user-level implementation presents some challenges: the receiving application must sense and control the behavior of the receiving and sending TCP stacks with sufficient finesse to obtain RTT samples for individual TCP packets that may be as small as a few milliseconds. Neither the socket libraries nor the mechanisms that underlie them were designed with this sort of thing in mind; for example, receive calls may block awaiting the arrival of more data across the network if there is less data buffered than was requested by the call. Our implementation avoids numerous such pitfalls.
On entry to the read loop (box 47 of FIG. 4) we test for the steady state in which RcvWnd = 0. The recv(2*MSS) operation opens RcvWnd by precisely 2*MSS (maximum segment size), ensuring a rapid reaction from both the receiving and sending TCP drivers. The 2*MSS RcvWnd permits the sender to transmit two segments, but in order to obtain an accurate RTT estimate we are interested only in the arrival time of the first of these segments: hence we cannot simply issue a recv(2*MSS) call.
Next we must deal with any surplus data beyond the expected 2*MSS that may already be buffered in the stack. The design of the protocol stack admits a degree of asynchrony which typically leads to the presence of more buffered data within the stack than might be expected. These surplus data are drained before we attempt to sample the RTT. A hint as to their presence can be obtained by comparing the results of the recv(MSG_PEEK) and WSAloctl(FIONREAD) routines, both of which claim to return the amount of data queued in a socket, the difference being that the recv(MSG_PEEK)call reports additional data that is queued in TCP awaiting buffer space. In general though, the receiving application should take care to deplete the stack of surplus data when sampling the RTT.
At this point the receiving stack is drained of data we suspend on the socket event until data arrives in the socket. A complication here is that the sending TCP driver will periodically probe a zero size RcvWnd with a one-byte packet in order to test whether the RcvWnd has increased. The receiver should not confuse one of these zero window probes with the first segment of a 2*MSS read operation, as this would corrupt the RTT estimate.
We obtain an RTT sample from the arrival time of the first segment, and wait for the second segment to arrive before repeating the loop.
Further details with respect to a particular kernel-level implementation using TCP are now given.
In order to obtain RTT samples for the Rate Limiting mode we need to be rapidly notified when the first segment of a 2*MSS pair arrives on a BaTS connection. We achieve this by modifying the routine that recalculates RcvWnd when the next expected segment arrives on a connection to include a call to one of our procedures.
One final point with respect to the kernel implementation concerns the timely transmission of acks. There are mechanisms within the TCP driver for requesting and sending acks by waiting for a timer-based routine to transmit a packet in the
event that no segments have been transmitted before the timeout occurs. The latency of these timers would be damaging our timings so we avoid them by sending out-of-band acks directly within the BaTS code; this requires a modest amount of additional mechanism, namely a new work queue for pending acks, due to the locking regimes and interrupt request levels involved.
Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.
The methods described above may be performed by software in machine
readable form on a storage medium. This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions. Any range or device value given herein may be extended or altered without losing the effect sought, as will be apparent to the skilled person.

It will be understood that the above description of a preferred embodiment is given by way of example only and that various modifications may be made by those skilled in the art.

## Claims

1. A method of enabling a receiver (11) to estimate a round trip time between itself and a transmitter (1 2) in a communications network (10), said round trip time being a time taken for travel from one of the receiver and transmitter to the other and back again using a communications protocol that comprises a flow control mechanism, **characterised in that** said method comprises the steps of:
(i) using said flow control mechanism to interrupt transmission of data from the transmitter to the receiver (20);
(ii) using said flow control mechanism to resume transmission of data from the transmitter to the receiver; and
(iii) estimating said round trip time on the basis of information about the time associated with data arriving from the transmitter at the receiver following said resumption.

2. A method as claimed in claim 1 wherein said receiver is a simplex receiver.

3. A method as claimed in claim 1 or claim 2 wherein said time associated with the resumption comprises a first time being the time at which the flow control mechanism is used to resume transmission; and wherein said time associated with the resumption comprises a second time being the time at which a data packet is received at the receiver following resumption.

4. A method as claimed in any preceding claim wherein said time comprises a time interval being the duration between resumption of transmission and receipt of data at the receiver.

5. A method as claimed in any preceding claim wherein said step (i) of using the flow control mechanism comprises allowing one or more buffers at the receiver to become full.

6. A method as claimed in claim 5 wherein said step (ii) of using the flow control mechanism further comprises at least partially emptying said buffers in order to allow transmission to resume.

7. A method as claimed in any preceding claim wherein said receiver is provided by a software application arranged to operate with a conventional operating system on a personal computer.

8. A method as claimed in any preceding claim wherein said communications protocol is selected from: TCP; SCTP and any connection oriented communications protocol comprising a flow control mechanism.

9. A method as claimed in claim 5 wherein said step (iii) of estimating round trip time further comprises detecting an increase in the amount of data in said buffers.

10. A method as claimed in any preceding claim which further comprises repeating the method to estimate a plurality of round trip time values and applying one or more of filtering and smoothing to those values.

11. A method as claimed in claim 10 wherein said smoothing comprises computing a weighted average of the round trip time values.

12. A method as claimed in claim 10 wherein said filtering comprises discarding round trip time values which fall outside a pre-specified range or dynamically computed range.

13. A receiver (11) arranged to estimate a round trip time between itself and a transmitter (12) in a communications network (10), said round trip time being a time taken for travel from one of the receiver and transmitter to the other and back again using a communications protocol that comprises a flow control mechanism, **characterised in that** said receiver comprises:
(i) a processor (13) arranged to use the flow control mechanism to interrupt transmission of data from the transmitter to the receiver;
(ii) said processor being further arranged to use the flow control mechanism to resume transmission of data from the transmitter to the receiver; and
(iii) an estimator (14) arranged to estimate said round trip time on the basis of information about time associated with said interruption.

14. A receiver as claimed in claim 13 which is a simplex receiver.

15. A receiver as claimed in claim 13 or claim 14 comprising a software application arranged to operate with a conventional operating system on a personal computer.

16. A receiver as claimed in any of claims 13 to 1 5 wherein said time associated with the resumption comprises a first time being the time at which the flow control mechanism is used to resume transmission; and wherein said time associated with the resumption comprises a second time being the time at which a data packet is received at the receiver following the resumption.

17. A receiver as claimed in claim 13 wherein said time comprises a time interval being the duration between resumption of transmission and receipt of data at the receiver.

18. A receiver as claimed in any of claims 13 to 17 wherein said step (i) of using the flow control mechanism comprises allowing one or more buffers at the simplex receiver to become full.

19. A receiver as claimed in claim 18 wherein said step (i) of using the flow control mechanism further comprises at least partially emptying said buffers in order to allow transmission to resume.

20. A computer program stored on a computer readable medium and arranged to control a receiver (11) in order to estimate a round trip time between itself and a transmitter (12) in a communications network (10), said round trip time being a time taken for travel from one of the receiver and transmitter to the other and back again using a communications protocol that comprises a flow control mechanism, **characterised in that** said computer program is arranged to control the receiver such that it:
(i) uses said flow control mechanism to interrupt transmission of data from the transmitter to the receiver;
(ii) uses said flow control mechanism to resume transmission of data from the transmitter to the receiver; and
(ii) estimates said round trip time on the basis of information about time associated with said interruption.

## Patentansprüche

1. Verfahren zum Aktivieren eines Receivers (11), eine Umlaufzeit zwischen sich selbst und einem Sender (12) in einem Kommunikationsnetz zu schätzen, wobei die Umlaufzeit eine Zeit ist, die für das Zurücklegen einer Strecke von einem von dem Empfänger und Sender zu dem anderen und zurück unter Verwendung eines Kommunikationsprotokolls benötigt wird, das einen Flußsteuerungsmechanismus umfaßt, **dadurch gekennzeichnet, daß** das Verfahren die Schritte umfaßt:
(i) Verwenden des Flußsteuerungsmechanismus zur Unterbrechung einer Datenübertragung vom Sender zum Empfänger (20);
(ii) Verwenden des Flußsteuerungsmechanismus zur Wiederaufnahme einer Datenübertragung vom Sender zum Empfänger; und
(iii) Abschätzen der Umlaufzeit auf der Basis von Informationen über die Daten zugeordnete Zeit, die vom Sender am Empfänger nach der Wiederaufnahme ankommen.

2. Verfahren nach Anspruch 1, wobei der Receiver ein Simplex-Receiver ist.

3. Verfahren nach Anspruch 1 oder 2, wobei die der Wiederaufnahme zugeordnete Zeit eine erste Zeit umfaßt, die die Zeit ist, zu der der Flußsteuerungsmechanismus zur Wiederaufnahme einer Übertragung verwendet wird, und die Zeit, die der Wiederaufnahme zugeordnet ist, eine zweite Zeit umfaßt, die die Zeit ist, zu der ein Datenpaket am Empfänger nach einer Wiederaufnahme empfangen wird.

4. Verfahren nach einem der vorhergehenden Ansprüche, wobei die Zeit ein Zeitintervall umfaßt, daß die Dauer zwischen einer Wiederaufnahme einer Übertragung und einem Empfang von Daten am Empfänger ist.

5. Verfahren nach einem der vorhergehenden Ansprüche, wobei der Schritt (i) eines Verwendens des Flußsteuerungsmechanismus umfaßt, es für einen oder mehrere Puffer am Empfänger zuzulassen, daß diese voll werden.

6. Verfahren nach Anspruch 5, wobei der Schritt (ii) eines Verwendens des Flußsteuerungsmechanismus des weiteren ein zumindest teilweises Entleeren der Puffer umfaßt, um eine Wiederaufnahme der Übertragung zuzulassen.

7. Verfahren nach einem der vorhergehenden Ansprüche, wobei der Empfänger durch eine Softwareanwendung bereitgestellt wird, die eingerichtet ist, mit einem herkömmlichen Betriebssystem auf einem PC zu arbeiten.

8. Verfahren nach einem der vorhergehenden Ansprüche, wobei das Kommunikationsprotokoll gewählt ist aus: TCP; SCTP und jedem beliebigen verbindungsorientierten Kommunikationsprotokoll, das einen Flußsteuerungsmechanismus umfaßt.

9. Verfahren nach Anspruch 5, wobei der Schritt (iii) eines Schätzens der Umlaufzeit des weiteren ein Erfassen eines Anwachsens der Datenmenge in den Puffern umfaßt.

10. Verfahren nach einem der vorhergehenden Ansprüche, das des weiteren ein Wiederholen des Verfahrens umfaßt, um eine Mehrzahl von Umlaufzeitwerten zu schätzen und eines von Filtern und Glätten auf diese Werte anzuwenden.

11. Verfahren nach Anspruch 10, wobei das Glätten ein Berechnen eines gewichteten Mittelwerts der Umlaufzeitwerte umfaßt.

12. Verfahren nach Anspruch 10, wobei das Filtern ein Weglassen von Umlaufzeitwerten umfaßt, die außerhalb eines vorbestimmten Bereichs oder eines dynamisch berechneten Bereichs liegen.

13. Empfänger (11), der eingerichtet ist, eine Umlaufzeit zwischen sich selbst und einem Sender (12) in einem Kommunikationsnetz (10) zu schätzen, wobei die Umlaufzeit eine Zeit ist, die für das Zurücklegen einer Strecke von einem von dem Empfänger und dem Sender zu dem anderen und zurück unter Verwendung eines Kommunikationsprotokolls benötigt wird, das einen Flußsteuerungsmechanismus umfaßt, **dadurch gekennzeichnet, daß** der Empfänger umfaßt:
(i) einen Prozessor (13), der eingerichtet ist, den Flußsteuerungsmechanismus zu verwenden, um eine Datenübertragung vom Sender zum Empfänger zu unterbrechen;
(ii) wobei der Prozessor des weiteren eingerichtet ist, den Flußsteuerungsmechanismus zu verwenden, um eine Datenübertragung vom Sender zum Empfänger wieder aufzunehmen; und
(iii) einen Schätzer (14), der eingerichtet ist, die Umlaufzeit auf der Basis von Informationen über die der Unterbrechung zugeordnete Zeit zu schätzen.

14. Empfänger nach Anspruch 13, der ein Simplex-Empfänger ist.

15. Empfänger nach Anspruch 13 oder 14, wlcher eine Softwareanwendung aufweist, die eingerichtet ist, mit einem herkömmlichen Betriebssystem auf einem PC zu arbeiten.

16. Empfänger nach einem der Ansprüche 13 bis 15, wobei die der Wiederaufnahme zugeordnete Zeit eine erste Zeit umfaßt, die die Zeit ist, zu der der Flußsteuerungsmechanismus zur Wiederaufnahme einer Übertragung verwendet wird, und wobei die der Wiederaufnahme zugeordnete Zeit eine zweite Zeit umfaßt, die die Zeit ist, zu der ein Datenpaket am Empfänger nach der Wiederaufnahme empfangen wird.

17. Empfänger nach Anspruch 13, wobei die Zeit ein Zeitintervall umfaßt, das die Dauer zwischen einer Wiederaufnahme einer Übertragung und einem Empfang von Daten am Empfänger ist.

18. Empfänger nach einem der Ansprüche 13 bis 17, wobei der Schritt (i) eines Verwendens des Flußsteuerungsmechanismus umfaßt, es für einen oder mehrere Puffer am Simplex-Empfänger zuzulassen, daß sie voll werden.

19. Empfänger nach Anspruch 18, wobei der Schritt (i) eines Verwendens des Flußsteuerungsmechanismus des weiteren ein zumindest teilweises Entleeren der Puffer umfaßt, um eine Wiederaufnahme einer Übertragung zu ermöglichen.

20. Computerprogramm, das auf einem computerlesbaren Medium gespeichert ist und eingerichtet ist, einen Empfänger (11) zu steuern, um eine Umlaufzeit zwischen sich selbst und einem Sender (12) in einem Kommunikationsnetz zu schätzen, wobei die Umlaufzeit eine Zeit ist, die für das Zurücklegen einer Strecke von einem von dem Empfänger und Sender zu dem anderen und zurück unter Verwendung eines Kommunikationsprotokolls benötigt wird, das einen Flußsteuerungsmechanismus umfaßt, **dadurch gekennzeichnet, daß** das Computerprogramm eingerichtet ist, den Empfänger so zu steuern, daß er:
(i) den Flußsteuerungsmechanismus verwendet, um eine Datenübertragung vom Sender zum Empfänger zu unterbrechen;
(ii) den Flußsteuerungsmechanismus verwendet, um eine Datenübertragung vom Sender zum Empfänger wiederaufzunehmen; und
(iii) die Umlaufzeit auf der Basis von Informationen über die der Unterbrechung zugeordnete Zeit schätzt.

## Revendications

1. Procédé d'activation d'un récepteur (11) pour estimer un temps d'aller et retour entre lui-même et un émetteur (12) dans un réseau de communications (10), ledit temps d'aller et retour étant un temps pris pour aller à partir d'un du récepteur et de l'émetteur à l'autre et de revenir en utilisant un protocole de communication qui comprend un mécanisme de commande de flux, **caractérisé en ce que** ledit procédé comprend les étapes de :
(i) utilisation dudit mécanisme de commande de flux pour interrompre une transmission de données à partir de l'émetteur au récepteur (20) ;
(ii) utilisation dudit mécanisme de commande de flux pour reprendre la transmission des données à partir de l'émetteur au récepteur ; et
(iii) estimation dudit temps d'aller et retour sur la base d'informations concernant le temps associé aux données arrivant à partir de l'émetteur sur le récepteur après ladite reprise.

2. Procédé selon la revendication 1, dans lequel ledit récepteur est un récepteur simplex.

3. Procédé selon la revendication 1 ou la revendication 2, dans lequel ledit temps associé à la reprise comprend un premier temps étant le temps auquel le mécanisme de commande de flux est utilisé pour reprendre la transmission ; et dans lequel ledit temps associé à la reprise comprend un second temps étant le temps auquel un paquet de données est reçu sur le récepteur après la reprise.

4. Procédé selon l'une quelconque des revendications précédentes, dans lequel ledit temps comprend un intervalle de temps étant la durée entre la reprise de transmission et la réception des données sur le récepteur.

5. Procédé selon l'une quelconque des revendications précédentes, dans lequel ladite étape (i) d'utilisation du mécanisme de commande de flux comprend l'autorisation d'un ou de plusieurs tampons sur le récepteur à se remplir complètement.

6. Procédé selon la revendication 5, dans lequel ladite étape (ii) d'utilisation du mécanisme de commande de flux comprend en outre au moins le vidage partiellement desdits tampons afin de permettre à la transmission de reprendre.

7. Procédé selon l'une quelconque des revendications précédentes, dans lequel ledit récepteur est fourni par une application logicielle disposée pour fonctionner avec un système d'exploitation conventionnel sur un ordinateur personnel.

8. Procédé selon l'une quelconque des revendications précédentes, dans lequel ledit protocole de communication est sélectionné à partir de: TCP ; SCTP et n'importe quel protocole de communication orienté connexion comprenant un mécanisme de commande de flux.

9. Procédé selon la revendication 5, dans lequel ladite étape (iii) d'estimation de temps d'aller et retour comprend en outre la détection d'une augmentation de la quantité de données dans lesdits tampons.

10. Procédé selon l'une quelconque des revendications précédentes qui comprend en outre la répétition du procédé pour estimer une pluralité de valeurs de temps d'aller et retour et l'application d'un ou de plusieurs filtrages et lissages à ces valeurs.

11. Procédé selon la revendication 10, dans lequel ledit lissage comprend le calcul d'une moyenne pondérée des valeurs de temps d'aller et retour.

12. Procédé selon la revendication 10, dans lequel ledit filtrage comprend le rejet des valeurs de temps d'aller et retour qui chutent en dehors d'une gamme pré-spécifiée ou d'une gamme calculée dynamiquement.

13. Récepteur (11) disposé pour estimer un temps d'aller et retour entre lui-même et un émetteur (12) dans un réseau de communication (10), le temps d'aller et retour étant un temps pris pour aller à partir d'un du récepteur et de l'émetteur à l'autre et revenir en utilisant un protocole de communication qui comprend un mécanisme de commande de flux, **caractérisé en ce que** ledit récepteur comprend :
(i) un processeur (13) disposé pour utiliser le mécanisme de commande de flux pour interrompre la transmission de données à partir de l'émetteur au récepteur ;
(ii) ledit processeur étant en outre disposé pour utiliser le mécanisme de commande de flux pour reprendre la transmission de données de l'émetteur au récepteur ; et
(iii) un estimateur (14) disposé pour estimer ledit temps d'aller et retour sur la base d'informations concernant le temps associé à ladite interruption.

14. Récepteur selon la revendication 13, qui est un récepteur simplex.

15. Récepteur selon la revendication 13 ou la revendication 14, comprenant une application logicielle disposée pour fonctionner avec un système d'exploitation conventionnel sur un ordinateur personnel.

16. Récepteur selon l'une quelconque des revendications 13 à 15, dans lequel ledit temps associé à la reprise comprend un premier temps étant le temps auquel le mécanisme de commande de flux est utilisé pour reprendre une transmission ; et dans lequel ledit temps associé avec la reprise comprend un second temps étant le temps auquel un paquet de données est reçu sur le récepteur après la reprise.

17. Récepteur selon la revendication 13, dans lequel ledit temps comprend un intervalle de temps étant la durée entre la reprise de transmission et de réception des données sur le récepteur.

18. Récepteur selon l'une quelconque des revendications 13 à 17, dans lequel ladite étape (i) d'utilisation du mécanisme de commande de flux comprend l'autorisation d'un ou de plusieurs tampons sur le récepteur simplex à se remplir complètement.

19. Récepteur selon la revendication 18, dans lequel ladite étape (i) d'utilisation du mécanisme de commande de flux comprend en outre au moins le vidage partiellement desdits tampons afin de permettre à la transmission de reprendre.

20. Programme informatique stocké sur un support lisible par ordinateur et disposé pour commander un récepteur (11) afin d'estimer un temps d'aller et retour entre lui-même et un émetteur (12) dans un réseau de communication (10), ledit temps d'aller et retour étant un temps pris pour aller à partir d'un du récepteur et de l'émetteur à l'autre et de revenir en utilisant un protocole de communication qui comprend un mécanisme de commande de flux, **caractérisé en ce que** ledit programme informatique est disposé pour commander le récepteur de sorte qu'il :
(i) utilise ledit mécanisme de commande de flux pour interrompre la transmission de données à partir de l'émetteur au récepteur ;
(ii) utilise ledit mécanisme de commande de flux pour reprendre la transmission de données à partir de l'émetteur au récepteur ; et
(iii) estime le temps d'aller et retour sur la base d'informations concernant le temps associé à ladite interruption.
